(19) Europäisches Patentamt
European Patent Office
Office européen des brevets

(11) Veröffentlichungsnummer: **0 198 044 B1**

(12) # EUROPÄISCHE PATENTSCHRIFT

(45) Veröffentlichungstag der Patentschrift: **08.02.89**

(51) Int. Cl.⁴: **C 09 B 67/32**, C 09 B 67/22

(21) Anmeldenummer: **85905327.4**

(22) Anmeldetag: **12.10.85**

(86) Internationale Anmeldenummer: **PCT/EP 85/00536**

(87) Internationale Veröffentlichungsnummer: **WO 86/02658 (09.05.86** Gazette **86/10)**

(54) **VERFAHREN ZUR LAGERSTABILISIERUNG VON FLÜSSIGEINSTELLUNGEN KATIONISCHER FARBSTOFFE.**

(30) Priorität: **26.10.84 DE 3439266**

(43) Veröffentlichungstag der Anmeldung: **22.10.86 Patentblatt 86/43**

(45) Bekanntmachung des Hinweises auf die Patenterteilung: **08.02.89 Patentblatt 89/6**

(84) Benannte Vertragsstaaten: **AT BE CH DE FR GB IT LI**

(56) Entgegenhaltungen:
**EP-A- 0 114 574**
**FR-A- 2 185 970**

**Chemical Abstracts, Vol. 102, No. 26, July 1985, Columbus, Ohio (US), see page 70 & JP A 8504559 (HODOGAYA) 11 January 1985**
**Chemical Abstracts, Vol. 91, No. 8, August 1979, Columbus, Ohio (US), see page 80 & JP A 7930220 (HODOGAYA) 6 March 1979**

(73) Patentinhaber: **HOECHST AKTIENGESELLSCHAFT, Postfach 80 03 20, D-6230 Frankfurt am Main 80 (DE)**

(72) Erfinder: **HÄHNKE, Manfred, Behringstrasse 13, D-6233 Kelkheim (Taunus) (DE)**
Erfinder: **ONG, Sienling, Jahnstrasse 38, D-6238 Hofheim am Taunus (DE)**
Erfinder: **HOHMANN, Kurt, Am Forsthaus Gravenbruch 55, D-6078 Neu-Isenburg (DE)**

**EP 0 198 044 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Es ist allen Fachleuten bekannt, dass viele Zubereitungen von kationischen Farbstoffen eine limitierte Lagerstabilität aufweisen. Dieser Befund gilt für Pulvereinstellungen sowie insbesondere für Flüssigeinstellungen; ganz besonders trifft dieser Sachverhalt jedoch für die Flüssigeinstellungen von Mischungen kationischer Farbstoffe zu.

Handelsprodukte, welche aus Farbstoffmischungen bestehen, spielen in der Praxis sowohl im Buntbereich als auch im Marinblau- und Schwarzsektor eine grosse Rolle. Vor allem im Marineblau- und Schwarzbereich bevorzugt die Praxis wegen der bei diesen Farbtönen (Mengen) besonders relevanten Wiege-, Dosier-, Löse- und Staubprobleme den Einsatz von Flüssigeinstellungen.

Unter guter Lagerstabilität hat man die Tatsache zu verstehen, dass ein Farbstoff / eine Farbstoffmischung in einem praxisüblichen Temperaturbereich während mehrerer Monate oder mehrerer Jahre unverändert stabil bleibt, das heisst weder Farbstärkeeinbussen noch Farbtonveränderungen und auch keine Löslichkeitsverschlechterungen erleidet. Der praxisübliche Temperaturbereich beträgt dabei 0° - 60°C, bevorzugt 20 - 40°C.

Es ist auch bekannt, dass man im Falle von Farbstoff-Handelsmarken durch eine geschickte Auswahl der Stellmittel bzw. Lösungsmittel, sowie durch die Einstellung eines optimalen pH-Wertes die Lagerstabilität beeinflussen kann. Allerdings sind besonders bei Flüssigeinstellungen von Farbstoffmischungen auch unter Berücksichtigung dieser Punkte noch viele Praxiswünsche (Vermeidung von Fehlfärbungen) bzw. Herstellerwünsche (Vermeidung von Reklamationen durch die Kundschaft) offen geblieben.

Es wurde nun überraschenderweise gefunden, dass man die Lagerstabilität von kationischen Farbstoffen in Form von Flüssigeinstellungen, und hier wiederum insbesondere der Flüssigeinstellungen von Mischungen kationischer Farbstoffe oxidativ stabilisieren kann.

Dieses Resultat ist vor allem auch deshalb erstaunlich, weil man kationische Farbstoffe, welche z.B. auf Polyacrylnitrilfasern aufgefärbt wurden, in vielen Fällen durch Oxidationsmittel unter geeigneten Bedingungen (z.B. kochend) zerstören, das heisst aufhellen oder ganz abziehen/bleichen kann.

Gegenstand der vorliegenden Erfindung ist somit ein Verfahren zur Lagerstabilisierung von wässrigen Flüssigeinstellungen kationischer bzw. in saurem Medium protonisierbarer Farbstoffe oder Mischungen solcher Farbstoffe, die ausser dem vorgesehenen Farbmittel und Wasser gegebenenfalls noch ein oder mehrere, mit Wasser mischbare organische Lösungsmittel sowie gegebenenfalls noch organische und/oder anorganische Säuren enthalten, welches dadurch gekennzeichnet ist, dass man der als homogene Lösung vorliegenden Handelsform solcher Farbstoffe mindestens ein anorganisches oder organisches Oxidationsmittel in Mengen 0,01 bis 1 % (bezogen auf das Gewicht der Farbstoffeinstellung) zusetzt.

Die erfindungsgemässe oxidative Stabilisierung erfolgt zweckmässigerweise durch den Zusatz von herkömmlichen Oxidationsmitteln wie Chlorsäure, chlorige Säure, Bromsäure, Jodsäure, Perchlorsäure, Chromsäure, Dichromsäure, Vanadinsäure, Peroxydischwefelsäure sowie deren Salzen, Eisen-III-Verbindungen, des weiteren durch oxidierend wirkende organische Verbindungen wie z.B. N-Halogenamide oder Chinone. Insbesondere haben sich dabei als Oxidationsmittel Chlorsäure oder Bromsäure und deren Natrium-, Kalium- oder Ammoniumsalze bewährt.

Die erfindungsgemäss Verwendung findenden Oxidationsmittel werden bevorzugt in Mengen von 0,1 bis 0,5% (bezogen auf das Gewicht der Farbstoffeinstellung) eingesetzt. Die Zugabe des Oxidationsmittels zur Farbstofflösung erfolgt als Festsubstanz oder als wässrige oder organische Lösung. Die Dosierung der Oxidationsmittel kann auch so geschehen, dass man auf einen genau definierten Wert des Redoxpotentials einstellt. Es kann auch eine Mischung aus mehreren Oxidationsmitteln eingesetzt werden. Die erfindungsgemäss verwendeten Oxidationsmittel müssen in den Flüssigfarbstoffen löslich sein.

Die erfindungsgemässe oxidative Stabilisierung kann bei einer Vielzahl von kationischen bzw. in saurem Medium protonisierbaren Farbstoffen angewandt werden. Besonders zu erwähnen sind Cyclammonium-Farbstoffe, Trialkylammonium-Farbstoffe, Anthrachinon-Farbstoffe, Triarylmethan-Farbstoffe, Methin-Farbstoffe, Azamethin-Farbstoffe, Diazamethin-Farbstoffe, Azin-Farbstoffe, Oxazin-Farbstoffe oder Pyridiniumoxypyridon-Farbstoffe.

Die erfindungsgemässe oxidative Stabilisierung ist von ganz besonderer Bedeutung bei Flüssigeinstellungen des Marineblau- und Schwarz-Bereichs, welche auf Mischungen aus Benzthiazolium-Blaufarbstoffen, aus Triazolium-Rotfarbstoffen sowie aus Diazamethin-Gelbfarbstoffen oder Pyridiniumoxypyridon-Gelbfarbstoffen basieren, bzw. welche gegebenenfalls ausserdem noch Malachitgrün enthalten.

Die zur Stabilisierung vorgesehenen kationischen Farbstoffe können für das Anwendungsgebiet der Textilfärbung (Polyacrylnitrilfasern, modifizierte Polyesterfasern) oder der Papier- und Holzfärbung bestimmt sein. Es kann sich dabei um Einzelfarbstoffe, bevorzugt aber um Farbstoffmischungen aus 2 bis 5, bevorzugt aus 3 Komponenten handeln.

Der pH-Wert der erfindungsgemäss eingestellten Flüssigfarbstoffe kann dabei zwischen 1 und 6 liegen.

Die erfindungsgemäss erhältlichen Farbstoffeinstellungen zeichnen sich durch eine sehr gute Lagerstabilität aus, was sich besonders deutlich beim Temperaturbereich über 20°C bemerkbar macht. Aus coloristischer Sicht ergibt sich, abgesehen von der Lagerstabilität, kein Einfluss auf den Ausfall von Färbungen.

Flüssigzubereitungen von kationischen Farbstoffen, die Zusätze von Oxidationsmitteln aufweisen, werden vom Stand der Technik wohl bereits erwähnt:

So betrifft die japanische Patentbekanntmachung JP-A-79-30220 [Chem. Abstr. 91/8 (1979), 58 613x]

Flüssigzubereitungen von solchen Farbstoffen in feinstdispergierter Form, welche dadurch erzeugt werden, dass man einen kationischen Farbstoff aus seiner Lösung mittels stöchiometrischer Mengen von Perchlorsäure oder eines ihrer wasserlöslichen Salze als Farbstoff-Perchlorat ausfällt, danach in Wasser durch Mahlen unter Zusatz von einem Polyethylenoxid-Additionsprodukt dispergiert und diese Dispersion mit wasserlöslichen Celluloseestern versetzt unter Erhalt wässriger Farbstoffpräparationen von angeblich hervorragender Lagerfähigkeit. Die so herausgestellte Lagerstabilität betrifft offensichtlich den Feinverteilungszustand des in der Dispersion vorliegenden unlöslichen Farbstoff-Perchlorsäure-Komplexes, wobei die Anwesenheit eines nichtionischen Tensides zwingend ist. Auf die schmutzabweisende Wirkung derartiger Einstellungen bei ihrer Anwendung zum Bedrucken von PAC-Textilien wird an dieser Stelle besonders hingewiesen.

Im Unterschied dazu handelt es sich im Falle der Flüssigeinstellungen nach der vorliegenden Erfindung um homogene Farbstofflösungen (also nicht um Dispersionen) und um die erhöhte Lagerstabilität der chemischen Farbstoffsubstanz nach Zugabe von Oxidationsmitteln. Letztere beruht ausschliesslich auf der Oxidationswirkung des Hilfsmittels gegenüber der beim Lagern vor allem unter Wärmeeinwirkung (tropische Länder) eintretenden Schädigung des Farbstoffes durch Reduktion, im Falle von JA-A-79-30220 dagegen aber auf physikalischer Grundlage; die Ausfällung des Farbstoffes als Perchlorat ergibt lediglich eine gegenüber Agglomeration beständige feinkristalline Verteilungsform des Komplexsalzes aufgrund besonderer Partikelgrösse bzw. Oberflächenbeschaffenheit, was vermutlich auch mit dem schmutzabweisenden Verhalten zusammenhängt.

In der französischen Offenlegungsschrift FR-A-2 185 970 wird die Herstellung von Transferdruckpapieren unter Mitverwendung von bestimmten kationischen Farbstoffen und Oxidationsmitteln beschrieben. Hierbei handelt es sich eindeutig um das trockene Papier, also um ein wasserfreies System.

Die in der FR-A-2 185 970 erwähnten Farbstofftypen betreffen als chromophores System ausschliesslich solche chemische Verbindungsklassen, welche sehr reduktionsempfindlich sind und durch Reduktion (z.B. durch den bekannten reduktiven Einfluss der Cellulose des Trägermaterials) leicht in die entsprechenden Leukofarbstoffe übergehen. Derartige Leukofarbstoffe sind stets farbschwach oder farblos. Der Zusatz des Oxidationsmittels bewirkt die Kompensation des zuvor besprochenen Reduktionseinflusses bei der hohen Transfertemperatur und erhält so den Farbstoff oxidativ in der «farbigen» Form.

Azofarbstoffe werden in der FR-A-2 185 970 nicht erwähnt, da bei ihnen auch kein stabilisierender Effekt zu erhalten ist, einfach deshalb, weil mit einer Reduktion eine oxidativ nicht mehr umkehrbare Molekül-Zerstörung einhergeht.

Die Thermotransferierbarkeit von Farbstoffen lässt darüber hinaus für den Fachmann keinen logischen Zusammenhang zur Lagerstabilität (über Monate/Jahre) eines Flüssigfabstoffs erwarten. Ebenso macht die sachlich getroffene Einschränkung auf unter Transfer-Bedingungen brauchbare Farbstoffe des basischen Typs zugleich deutlich, dass die aus der FR-A-2 185 970 entnehmbare technische Lehre von anderen Überlegungen ausgeht als diejenigen, welche im Falle der erfindungsgemässen Flüssigeinstellungen eine Rolle spielen.

Die nachfolgenden Beispiele dienen der Erläuterung des Erfindungsgedankens, unter Teilen sind Gewichtsteile, unter Prozent sind Gewichtsprozent zu verstehen.

*Beispiel 1*

Es wird eine Mischung aus 31 Teilen des Monoazofarbstoffes C.I. Basic Blue 41 – C.I. – Nr. 11154 (handelsübliche Flüssigmarke mit ca. 20% Farbstoff-Methosulfat, ca. 20% Essigsäure und ca. 60% Wasser), 13 Teilen des Monoazofarbstoffes C.I. Basic Red 46 (handelsübliche Flüssigmarke mit ca. 25% Farbstoff-Methosulfat, ca. 25% Essigsäure und ca. 50% Wasser) sowie 11,5 Teilen des Methinfarbstoffes C.I. Basic Yellow 28 – C.I. – Nr. 48054 (handelsübliche Flüssigkmarke mit ca. 40% Farbstoff-Acetat, ca. 15% Essigsäure und ca. 45% Wasser) hergestellt, es werden 0,2 Teile Natriumchlorat zugegeben und es wird bis zum Auflösen des Natriumchlorats gerührt.

Die erhaltene Präparation mit einem pH-Wert von 1 bis 1,5 stellt eine homogene Lösung dar, welche Polyacrylnitrilfasern in einem tiefen Schwarz färbt und welche ausserordentlich gut lagerstabil ist.

*Beispiel 2*

Eine gemäss Beispiel 1 hergestellte Präparation sowie eine zu Vergleichszwecken hergestellte entsprechende Farbstoff-Mischung ohne den Zusatz von Natriumchlorat werden

a) 1 Jahr bei 0° bis 5°C
b) 1 Jahr bei 20°C
c) 2 Monate bei 40°C
d) 1 Monat bei 60°C

gelagert. Anschliessend wird jeweils im Vergleich zu den frisch hergestellten Farbstoffmischungen durch Abfiltrieren über Filterpapier und kurzes wässriges Nachspülen auf eventuellen unlöslichen Rückstand geprüft und durch Ausfärben auf handelsüblichen Polyacrylnitrilfasern auf eventuelle Veränderungen der Farbstärke und des Farbtones geprüft.

Dabei erhält man folgende Ergebnisse:

a) Die oxidativ stabilisierte Farbstoffmischung zeigt nach 1 Jahr bei 0° bis 5°C keinerlei Veränderungen, die von Natriumchlorat freie Einstellung zeigt bei der Filterprobe etwas schwarzen Rückstand.

b) Die oxidativ stabilisierte Farbstoffmischung zeigt nach 1 Jahr bei 20°C keinerlei Veränderungen, die von Natriumchlorat freie Einstellung zeigt bei der Filterprobe einen deutlichen schwarzen Rückstand und bei der Farbstärke einen Verlust von 5%.

c) Die oxidativ stabilisierte Farbstoffmischung zeigt nach 2 Monaten bei 40°C keinerlei Veränderungen, die von Natriumchlorat freie Einstellung zeigt bei der Filterprobe viel schwarzen Rückstand, bei der Farbstärke einen Verlust von 22% sowie einen viel grüneren Farbton.

d) Die oxidativ stabilisierte Farbstoffmischung zeigt nach 1 Monat bei 60°C praktisch keinerlei Veränderung, die von Natriumchlorat freie Einstellung ist weitgehend zerstört, was man bei der Filterprobe, bei der Farbstärke sowie beim Farbton feststellen kann.

*Beispiele 3 bis 15*

Ersetzt man bei der Arbeitsweise des Beispiels 1 das dort verwendete Natriumchlorat durch einen der nachfolgend aufgeführten Zusätze oder durch eine Mischung aus mehreren Zusätzen, so erhält man ebenfalls lagerstabile Farbstoffmischungen.

| *Beispiel* | *Zusatz* | *Menge (Teile)* |
|---|---|---|
| 3 | Na-Bromat | 0.3 |
| 4 | K-Jodat | 0.3 |
| 5 | Na-Chlorat + K-Perchlorat | 0.1<br>0.2 |
| 6 | K-Dichromat | 0.4 |
| 7 | $NH_4$-Chromat | 0.3 |
| 8 | Na-Chlorat + Na-Chlorit | 0.1<br>0.1 |
| 9 | Na-Metavanadat | 0.5 |
| 10 | K-Peroxydisulfat | 0.4 |
| 11 | Na-Perborat* | 0.1 |
| 12 | $NH_4$-Eisenalaun | 1 |
| 13 | K-Hexacyano-Ferrat (III) | 1 |
| 14 | N-Brom-succinimid | 0.1 |
| 15 | p-Benzochinon | 0.3 |

*) als Additionsverbindung aus Borat + $H_2O_2$

*Beispiel 16*

Es wird eine Mischung aus 14 Teilen des Monoazofarbstoffes C.I. Basic Blue 41 – C.I. – Nr. 11154 (handelsübliche Flüssigmarke mit ca. 20% Farbstoff-Methosulfat, ca. 20% Essigsäure und ca. 60% Wasser), 5 Teilen des Azofarbstoffes C.I. Basic Red 22 – C.I. – Nr. 11055 (handelsübliche Flüssigmarke mit ca. 40% Farbstoff-Methosulfat, ca. 20% Essigsäure und ca. 40% Wasser), 5 Teilen des Monoazofarbstoffes C.I. Basic Red 18 : 1 – C.I. – Nr. 11085 (handelsübliche Flüssigmarke mit ca. 45% Farbstoff-Acetat, 15% Essigsäure, 40% Wasser), 2 Teilen des Methinfarbstoffes C.I. Basic Yellow 29 (handelsübliche Flüssigkmarke mit ca. 20% Farbstoff-Acetat, 20% Essigsäure, 60% Wasser) sowie 2 Teilen des Disazofarbstoffes C.I. Basic Yellow 82 (entspr. handelsüblicher Flüssigmarke mit ca. 15% Farbstoff-Chlorid, 70% Essigsäure, 15% Wasser) hergestellt, es werden 0,5 Teile einer 10%igen wässrigen Lösung von Natriumchlorat zugegeben und der pH-Wert wird durch Zugabe von Natriumacetat auf 2,5 bis 3 eingestellt.

Die erhaltene Präparation färbt Polyacrylnitrilfasern marineblau an, sie ist sehr gut lagerstabil.

*Beispiel 17*

Es wird eine Mischung aus 50 Teilen des Monoazofarbstoffes C.I. Basic Blue 54 – C.I. – Nr. 11052 (handelsübliche Flüssigmarke mit ca. 25% Farbstoff-Methosulfat, 25% Essigsäure, 5% Ameisensäure, 45% Wasser) und 5 Teilen des Monoazofarbstoffes C.I. Basic Red 46 (handelsübliche Flüssigmarke mit ca. 25% Farbstoff-Methosulfat, ca. 25% Essigsäure und ca. 50% Wasser) hergestellt. Diese Mischung zeigt bei einer Redoxpotential-Messung (Messelektrode Pt 4805 Firma Ingold) 315 mV. Man gibt nun sowiel einer 10%igen wässrigen Natriumchlorat-Lösung hinzu, dass ein Redoxpotential von 340 mV erreicht wird.

Die erhaltene Farbstoffpräparation färbt Polyacrylnitrilfasern dunkelblau an, sie ist lagerstabil.

*Beispiel 18*

Es wird eine Mischung aus 5 Teilen des Monoazofarbstoffes C.I. Basic Blue 41 – C.I. – Nr. 11154 (handelsübliche Flüssigmarke mit ca. 20% Farbstoff-Methosulfat, ca. 20% Essigsäure und ca. 60% Wasser), 2 Teilen des Oxazinfarbstoffes C.I. Basic Blue 3 – C.I. – Nr. 51004 (handelsübliche Flüssigmarke mit ca. 30% Farbstoff-Chlorid, 10% Essigsäure, 10% Ethylenglykol, 50% Wasser, 10 Teilen des Azofarbstoffes C.I. Basic Red 22 – C.I. – Nr. 11055 (handelsübliche Flüssigmarke mit ca. 40% Farbstoff-Methosulfat, 20% Essigsäure, 40% Wasser), 5 Teilen des Monoazofarbstoffes C.I. Basic Red 18.1 – C.I. – Nr. 11085 (handelsübliche Flüssigmarke mit ca. 45% Farbstoff-Acetat, 25% Essigsäure, 30% Wasser), 20 Teilen des Methinfarbstoffes C.I. Basic Yellow 28 – C.I. – Nr. 48054 (handelsübliche Flüssigkmarke mit ca. 40% Farbstoff-Acetat, ca. 15% Essigsäure und ca. 45% Wasser) und 2 Teilen einer 10%igen wässrigen Kalium-Dichromat-Lösung hergestellt.

Diese Farbstoffmischung färbt Polyacrylnitrilfasern braun an, sie ist lagerstabil.

*Beispiel 19*

Es wird eine Mischung aus 20 Teilen des Polymethinfarbstoffes C.I. Basic Yellow 21 (handelsübliche Flüssigmarke mit ca. 20% Farbstoff-Chlorid, 20% Essigsäure, 60% Wasser), 3 Teilen des Monoazofarbstoffes C.I. Basic Blue 41 – C.I. – Nr. 11054 (handelsübliche Flüssigmarke mit ca. 20% Farbstoff-Methosulfat, ca. 20% Essigsäure und ca. 60% Wasser), 3 Teilen des Methinfarbstoffes C.I. Basic Blue 147 (handelsübliche Flüssigkmarke mit ca. 20% Farbstoff-Acetat, 20% Essigsäure, 60% Wasser) und 0,5 Teilen des Cyaninfarbstoffes C.I. Basic Red 14 (handelsübliche Flüssigmarke mit ca. 40% Farbstoff-Acetat, 20% Essigsäure, 40% Wasser) hergestellt.

Nach Zusatz von 1 Teil einer 10%igen wässrigen Natriumchlorat-Lösung erhält man eine lagerstabile Grün-Einstellung.

*Beispiel 20*

Es wird eine Mischung aus 80 Teilen des Monoazofarbstoffes C.I. Basic Blue 41 – C.I. – Nr. 11154 (handelsübliche Flüssigmarke mit ca. 20% Farbstoff-Methosulfat, ca. 20% Essigsäure und ca. 60% Wasser), 10 Teilen des Anthrachinonfarbstoffes C.I. Basic Blue 22 (handelsübliche Flüssigmarke mit ca. 35% Farbstoff-Acetat, 15% Essigsäure, 50% Wasser), 10 Teilen des Methinfarbstoffes C.I. Basic Violet 16 – C.I. – 48013 (handelsübliche Flüssigmarke mit ca. 40% Farbstoff-Acetat, 20% Essigsäure,

40% Wasser), 10 Teilen des Polymethinfarbstoffes C.I. Basic Yellow 21 (handelsübliche Flüssigmarke mit ca. 20% Farbstoff-Chlorid, 20% Essigsäure, 60% Wasser) und 1 Teil Natrium-Peroxydisulfat hergestellt.

Diese Mischung färbt Polyacrylnitrilfasern marineblau, sie ist lagerstabil.

*Beispiel 21*

Es wird eine Mischung aus 10 Teilen des Monoazofarbstoffes C.I. Basic Blue 41 – C.I. – Nr. 11154 (handelsübliche Flüssigmarke mit ca. 20% Farbstoff-Methosulfat, ca. 20% Essigsäure und ca. 60% Wasser), 50 Teilen des Monoazofarbstoffes C.I. Basic Red 46 (handelsübliche Flüssigmarke mit ca. 25% Farbstoff-Methosulfat, ca. 25% Essigsäure und ca. 50% Wasser), 10 Teilen des Methinfarbstoffes C.I. Basic Yellow 28 – C.I. – Nr. 48054 (handels übliche Flüssigmarke mit ca. 40% Farbstoff-Acetat, ca. 15% Essigsäure und ca. 45% Wasser) und 0,1 Teilen Natriumchlorat hergestellt.

Diese Mischung färbt Polyacrylnitrilfasern bordorot, sie ist lagerstabil.

*Beispiel 22*

Es wird eine Mischung aus 80 Teilen des Monoazofarbstoffes C.I. Basic Blue 41 – C.I. – Nr. 11154 (handelsübliche Flüssigmarke mit ca. 20% Farbstoff-Methosulfat, ca. 20% Essigsäure und ca. 60% Wasser), 5 Teilen des Monoazofarbstoffes C.I. Basic Red 46 (handelsübliche Flüssigmarke mit ca. 25% Farbstoff-Methosulfat, ca. 25% Essigsäure und ca. 50% Wasser), 5 Teilen eines Rotfarbstoffs der Formel

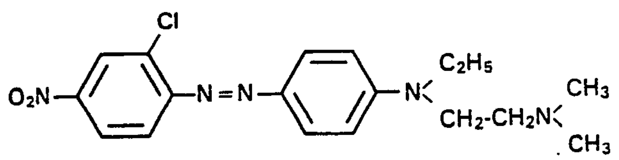

und 1 Teil Natriumchlorat hergestellt.

Diese Einstellung färbt Polyacrylnitrilfasern marineblau, sie ist lagerstabil.

*Beispiel 23*

Es wird eine Mischung aus 60 Teilen des Monoazofarbstoffes C.I. Basic Blue 41 – C.I. – Nr. 11154 (handelsübliche Flüssigmarke mit ca. 20% Farbstoff-Methosulfat, ca. 20% Essigsäure und ca. 60% Wasser), 20 Teilen des Triarylmethanfarbstoffes C.I. Basic Green 4 – C.I. – 42000 (handelsübliche Flüssigmarke mit ca. 40% Farbstoff-Acetat, 10% Essigsäure, 50% Wasser), 10 Teilen des Azofarbstoffes C.I. Basic Red 22 – C.I. – Nr. 11055 (handelsübliche Flüssigmarke mit ca. 40% Farbstoff-Methosulfat, 20% Essigsäure, 40% Wasser) und 5 Teilen des Methinfarbstoffes C.I. Basic Yellow 28 – C.I. – Nr. 48054 (handelsübliche Flüssigmarke mit ca. 20% Farbstoff-Chlorid, 10% Essigsäure, 70% Wasser) hergestellt. Nach Zugabe von 0,3 Teilen Natriumchlorat erhält man eine sehr lagerstabile Marineblaueinstellung.

**Patentansprüche**

1. Verfahren zur Lagerstabilisierung von wässrigen Flüssigeinstellungen kationischer bzw. in saurem Medium protonisierbarer Farbstoffe oder Mischungen solcher Farbstoffe, die ausser dem vorgesehenen Farbmittel und Wasser gegebenenfalls noch ein oder mehrere, mit Wasser mischbare organische Lösungsmittel sowie gegebenenfalls noch organische und/oder anorganische Säuren enthalten, dadurch gekennzeichnet, dass man der als homogene Lösung vorliegenden Handelsform solcher Farbstoffe mindestens ein anorganisches oder organisches Oxidationsmittel in Mengen von 0,01 bis 1% (bezogen auf das Gewicht der Farbstoffeinstellung) zusetzt.

2. Verfahren nach Anspruch 1, dadurch gekennzeichnet, dass es sich bei dem zur Stabilisierung vorgesehenen Farbmittel um Mischungen von 2 bis 5 verschiedenen kationischen Farbstoffen handelt.

3. Verfahren nach Anspruch 1 oder 2, dadurch gekennzeichnet, dass es sich bei den Oxidationsmitteln für die Stabilisierung um solche aus der Reihe von Chlorsäure, chlorige Säure, Bromsäure, Jodsäure, Perchlorsäure, Chromsäure, Dichromsäure, Vanadinsäure, Peroxydischwefelsäure sowie deren Salzen, Eisen III-Verbindungen oder oxidierend wirkenden organischen Verbindungen aus der Reihe von N-Halogenamiden oder Chinonen handelt.

4. Verfahren nach Anspruch 3, dadurch gekennzeichnet, dass es sich bei den Oxidationsmitteln um Chlorsäure oder Bromsäure oder um deren Natrium-, Kalium- oder Ammoniumsalze handelt.

5. Verfahren nach einem oder mehreren der Ansprüche 1 bis 4, dadurch gekennzeichnet, dass man zur Stabilisierung die Oxidationsmittel in Mengen von 0,1 bis 0,5% (bezogen auf das Gewicht der Farbstoffeinstellung) einsetzt.

6. Verfahren nach einem oder mehreren der Ansprüche 1 bis 5, dadurch gekennzeichnet, dass man zur Stabilisierung Mischungen von 2 oder mehreren Oxidationsmitteln einsetzt.

7. Verfahren nach einem oder mehreren der Ansprüche 1 bis 6, dadurch gekennzeichnet, dass man die Dosierung der Menge des zur Stabilisierung vorgesehenen Oxidationsmittels/der Oxidationsmittel über die Messung des Redoxpotentials steuert.

8. Verfahren nach einem oder mehreren der Ansprüche 1 bis 7, dadurch gekennzeichnet, dass es sich bei den zur Stabilisierung vorgesehenen Farbstoffen um solche aus der Reihe der Cyclammonium-Farbstoffe, Trialkylammonium-Farbstoffe, Anthrachinon-Farbstoffe, Triarylmethan-Farbstoffe, Methin-Farbstoffe, Azamethin-Farbstoffe, Diazamethin-Farbstoffe, Azin-Farbstoffe, Oxazin-Farbstoffe oder Pyridiniumoxypyridon-Farbstoffe handelt.

9. Verfahren nach einem oder mehreren der Ansprüche 1 bis 8, dadurch gekennzeichnet, dass es sich bei den zur Stabilisierung vorgesehenen Farbstoffen um solche aus der Reihe der Benzthiazolium-Blaufarbstoffe, Triazolium-Rotfarbstoffe, Diazamethin-Gelbfarbstoffe, Pyridiniumoxypyridon-Gelbfarbstoffe und/oder Malachitgrün handelt.

**Claims**

1. A process for the long-storage stabilization of aqueous liquid formulations of cationic dyes or of dyes which are protonatable in an acid medium, or mixtures of such dyes, which, besides the colorant to be stabilized and water, optionally additionally contain one or more watermiscible organic solvents and, again optionally, organic and/or inorganic acids, which comprises adding to the homogeneous solution of the commercial brand of such dyes at least one inorganic or organic oxidizing agent in amounts of 0.01 to 1% (based on the weight of the dye formulation).

2. The process as claimed in claim 1, wherein the colorant to be stabilized comprises mixtures which are composed of 2 to 5 diffrent cationic dyes.

3. The process as claimed in claim 1 or 2, wherein the oxidizing agents for the stabilization are those from the series of chloric acid, chlorous acid, bromic acid, iodic acid, perchloric acid, chromic acid, dichromic acid, vanadic acid, peroxodisulfuric acid or salts thereof, iron(III) compounds or oxidizing organic compounds from the series of N-haloamides or quinones.

4. The process as claimed in claim 3, wherein the oxidizing agents are chloric acid or bromic acid or the sodium, potassium or ammonium salts thereof.

5. The process as claimed in one or more of claims 1 to 4, wherein, to obtain stabilization, the oxidizing agents are used in amounts of 0.1 to 0.5% (based on the weight of the dye formulation).

6. The process as claimed in one or more of claims 1 to 5, wherein, to obtain stabilization, mixtures of 2 or more oxidizing agents are used.

7. The process as claimed in one or more of claims 1 to 6, wherein the measuring out of the amount of the oxidizing agent(s) provided for stabilization purposes is controlled via measurement of the redox potential.

8. The process as claimed in one or more of claims 1 to 7, wherein the dyes to be stabilized are those from the series of the cyclammonium dyes, trialkylammonium dyes, anthraquinone dyes, triarylmethane dyes, methine dyes, azamethine dyes, diazamethine dyes, azine dyes, oxazine dyes or pyridiniumoxypyridone dyes.

9. The process as claimed in one or more of claims 1 to 8, wherein the dyes to be stabilized are those from the series of the benzothiazolium blue dyes, triazolium red dyes, diazamethine yellow dyes, pyridiniumoxypyridone yellow dyes and/or malachite green.

**Revendications**

1. Procédé pour rendre stables au magasinage des préparations liquides de colorants cationiques ou protonisables en milieu aqueux ou de mélanges de tels colorants, qui contiennent, en plus du colorant précité et de l'eau, éventuellement encore un ou plusieurs solvant(s) organique(s) miscible(s) à l'eau ainsi que éventuellement encore des acides organiques et/ou minéraux, procédé caractérisé en ce qu'on ajoute, à la forme usuelle dans le commerce de tels colorants, se présentant sous la forme d'une solution homogène, au moins un oxydant minéral ou organique, que l'on ajoute en des quantités de 0,01 à 1% (sur la base du poids de la préparation de colorant).

2. Procédé selon la revendication 1, caractérisé en ce qu'il s'agit, dans le cas du colorant destiné à la stabilisation, de mélanges de 2 à 5 colorants cationiques différents.

3. Procédé selon la revendication 1 ou 2, caractérisé en ce qu'il s'agit, pour les oxydants destinés à la stabilisation, de ceux appartenant à la série de l'acide chlorique, de l'acide chloreux, de l'acide bromique, de l'acide iodique, de l'acide perchlorique, de l'acide chromique, de l'acide dichromique, de l'acide vanadique, de l'acide peroxydisulfurique ainsi que de leurs sels, des composés du fer-III ou de composés organiques à rôle oxydant, de la série des N-halogènamides ou des quinones.

4. Procédé selon la revendication 3, caractérisé en ce qu'il s'agit, pour les oxydants, de l'acide chlorique ou de l'acide bromique ou de leurs sels de sodium, de potassium ou d'ammonium.

5. Procédé selon une ou plusieurs des revendications 1 à 4, caractérisé en ce qu'on utilise, pour la stabilisation, l'oxydant en des quantités de 0,1 à 0,5% (sur la base du poids de la préparation de colorant).

6. Procédé selon une ou plusieurs des revendications 1 à 5, caractérisé en ce qu'on utilise, pour réaliser la stabilisation, des mélanges de deux ou de plus de deux oxydants.

7. Procédé selon une ou plusieurs des revendications 1 à 6, caractérisé en ce qu'on règle l'addition dosée de la quantité de l'oxydant ou des oxydants destinés à réaliser la stabilisation en se fondant sur la mesure du potentiel Redox.

8. Procédé selon une ou plusieurs des revendications 1 à 7, caractérisé en ce qu'il s'agit, pour les colorants destinés à la stabilisation, de ceux de la série des colorants de cyclammonium, des colorants de trialkylammonium, des colorants anthraquinoniques, des colorants du triarylméthane, de colorants méthiniques, de colorants azaméthiniques, de colorants diazaméthiniques, de colorants aziniques, de colorants oxaziniques ou de colorants du type pyridiniumoxypyridone.

9. Procédé selon une ou plusieurs des revendications 1 à 8, caractérisé en ce qu'il s'agit, pour les colorants destinés à la stabilisation, de ceux de la série des colorants bleus de type benzothiazolium, de colorants rouges du type triazolium, de colorants jaunes du type diazaméthine, de colorants jaunes du type pyridinium oxypyridone et/ou du vert malachite.